(19) Europäisches Patentamt
European Patent Office
Office européen des brevets

(11) Publication number: 0 255 184 B1

(12) EUROPEAN PATENT SPECIFICATION

(45) Date of publication of patent specification: 29.04.92

(51) Int. Cl.5: C08L 71/12, C08L 77/00

(21) Application number: 87201448.5

(22) Date of filing: 28.07.87

# (54) Impact modification of nylon/PPO blends.

(30) Priority: 29.07.86 US 890430

(43) Date of publication of application:
03.02.88 Bulletin 88/05

(45) Publication of the grant of the patent:
29.04.92 Bulletin 92/18

(84) Designated Contracting States:
DE GB IT

(56) References cited:
EP-A- 0 183 195
WO-A-85/05372

PATENT ABSTRACTS OF JAPAN, vol. 10, no. 172 (C-354)[2228], 18th June 1986; & JP - A - 6 121 146 (ENJINIARIN GU PLASTICS K.K.) 29-01-1986

PATET ABSTRACTS OF JAPAN, vol. 8, no. 114 (C-225)[1551], 26th May 1984; & JP - A - 59 27942 (ASAHI KASEI KOGYO K.K.) 14-02-1984

(73) Proprietor: SHELL INTERNATIONALE RESEARCH MAATSCHAPPIJ B.V.
Carel van Bylandtlaan 30
NL-2596 HR Den Haag(NL)

(72) Inventor: Modic, Michael John
1911 Westmead No. 2805
Houston Texas 77077(US)
Inventor: Gelles, Richard
2151 Kirkwood No. 266
Houston Texas 77077(US)

EP 0 255 184 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a thermoplastic composition.

Polyphenylene (oxide) ether resins are a well-known family of linear thermoplastic engineering resins. A wide variety of these resins and a number of methods for their preparation are disclosed in U.S. patent specifications 3,706,874 and 3,306,875 and in U.S. patent specifications 3,257,357 and 3,257,358. The resins produced display unique properties such as fatigue resistance and a high glass transition temperature (Tg) greater than 200 °C, which results in a high heat distortion temperature. However, the high Tg makes processing of these resins extremely difficult. The polyphenylene ether resins also lack a high level of impact resistance.

U.S. patent specifications 3,639,508 and 4,167,507 disclose that such compositions can be modified for greater resistance to fracture upon impact by including elastomeric block copolymers of a vinyl aromatic polymer such as polystyrene and a diene polymer such as polybutadiene. However, such compositions do not display suitable solvent resistance for many applications.

The polyamide resins useful in the composition of the present invention are also well-known in the art and include those semi-crystalline and amorphous resins commonly referred to as nylons. Suitable polyamides include those described in U.S. patent specifications 2,071,250; 2,071,251; 2,130,523; 2,130,948; 2,241,322; 2,312,966; 2,512,606 and 3,393,210. However, these resins are quite deficient to resistance to crack propagation. The tendency of polyamides to break in a brittle rather than ductile fashion is a significant limitation on their utility. U.S. patent specification 4,174,358 discloses that resins can be impact modified by a variety of additives. Some of these compositions displayed superior resistance to some solvents, such as gasoline, and due to their low viscosity displayed good processibility. However, the low glass transition temperature of polyamides excludes them from certain usages.

In Japanese Patent Publication No. 997/1970 and U.S. patent specification 3,379,792, it was disclosed that the addition of a small amount of polyamide improves the melt flow properties of polyphenylene ether. However, it is disclosed that, when a polyamide is added to a polyphenylene ether in an amount exceeding 20%, other characteristics of polyphenylene ether begin to deteriorate to a considerable extent. U.S. patent specification 4,338,421 discloses that polyphenylene ether/polyamide blends containing 5-70% polyphenylene ether display solvent and heat resistance; however, these blends show low impact strength.

It has now been discovered that a functionalized hydrogenated block copolymer of the A-B-A type wherein A designates a polymerized mono-alkenyl aromatic hydrocarbon block such as polystyrene and B designates a polymeric diene block which has had its unsaturation reduced by hydrogenation to less than 10% of the original saturation, will impart unexpectedly good physical properties in blends with polyamide resins and polyphenylene ether resins. Compositions according to this invention have high impact strength, high glass transition temperature and good solvent resistance.

Accordingly, the present invention provides a thermoplastic composition comprising in the range of from 5 to 70 per cent by weight of a polyphenylene ether resin, in the range of from 20 to 95 per cent by weight of a polyamide resin and in the range of from 0.5 to 90 per cent by weight of a functionalized monoalkenyl arene-conjugated diene block copolymer, wherein the functionalized block copolymer is a functionalized selectively hydrogenated block copolymer of the general formula $B_n(AB)_oA_p$ where n = 0 or 1, o = 0-50, p = 0 or 1 - with the proviso that n, and p are not zero when o is zero - to which has been grafted an acid compound or its derivative wherein

(1) each A is predominantly a polymerized monoalkenyl aromatic hydrocarbon block having an average molecular weight in the range of from 2,000 to 115,000;

(2) each B prior to hydrogenation is predominantly a polymerized conjugated diene hydrocarbon block having an average molecular weight in the range of from 20,000 to 450,000;

(3) the blocks A constituting in the range of from 5 to 95 weight per cent of the copolymer;

(4) the unsaturation of the block B is less than 10% of the original unsaturation;

(5) the unsaturation of the A blocks is above 50% of the original unsaturation; and

(6) substantially all of the acid compounds or their derivatives are grafted to the block copolymer at secondary or tertiary carbon positions in the B blocks. Such block co-polymers are known from US-A-4 578 429.

The polyphenylene ether resins useful in accordance with the present compositions are, as previously indicated, individually well known and readily available.

The preferred polyphenylene ethers are homo- and copolymers of the general formula:

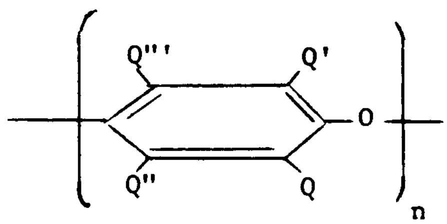

wherein Q, Q′, Q″ and Q‴ independently represent a hydrogen atom, hydrocarbon radicals, halohydrocarbon radicals having at least two carbon atoms between the halogen atom and the phenol nucleus, hydrocarbonoxy radicals and halohydrocarbonoxy radicals having at least two carbon atoms between the halogen atoms and the phenol nucleus, and Q′, Q″ and Q‴ in addition may be halogen with the proviso that Q and Q′ are preferably free from a tertiary carbon atom; and n represents the total number of monomer residues and is an integer of at least 50. Especially preferred is poly(2,6-dimethyl-1,4-phenylene)ether.

The polyamide resin can be produced by condensation of equimolar amounts of a saturated dicarboxylic acid containing from 4 to 12 carbon atoms per molecule with a diamine, in which the diamine contains from 4 to 14 carbon atoms per molecule. Excess diamine can be employed to provide an excess of amine end groups over carboxyl end groups in the polyamide. Examples of polyamides include polyhexamethylene adipamide (66 nylon), polyhexamethylene azelamide (69 nylon), polyhexamethylene sebacamide (610 nylon), and polyhexamethylene dodecanoamide (612 nylon), the polyamide produced by ring opening of lactams, i.e. polycaprolactam, polylauric lactam, poly-11-aminoundecanoic acid, bis(para-aminocyclohexyl) methane dodecanoamide, polyhexamethylene isophthalamide and polyhexamethylene tere-co-isophthalamide. It is also possible to use in the invention polyamides prepared by the copolymerization of two of the above polymers, or by terpolymerization of the above polymers or their components, for example, an adipic, isophthalic acid hexamethylene diamine copolymer. Preferably the polyamides are linear with a melting point in excess of 200 °C.

Block copolymers of conjugated dienes and vinyl aromatic hydrocarbons which are utilized include any of those which exhibit elastomeric properties and those which have 1,2-microstructure contents prior to hydrogenation of from about 7% to about 100%. These block copolymers need not be hydrogenated, however the hydrogenated polymers are preferred. Such block copolymers are multiblock copolymers of varying structures containing various ratios of conjugated dienes to vinyl aromatic hydrocarbons including those containing up to 60 per cent by weight of vinyl aromatic hydrocarbon. The multiblock co-polymers used are those described above

The block copolymers may be produced by any well known block polymerization or copolymerization procedures including the well known sequential addition of monomer techniques, incremental addition of monomer technique or coupling technique as illustrated in, for example, U.S. patent specifications 3,251,905; 3,390,207; 3,598,887 and 4,219,627. As is well known in the block copolymer art, tapered copolymer blocks can be incorporated in the multiblock copolymer by copolymerizing a mixture of conjugated diene and vinyl aromatic hydrocarbon monomers utilizing the difference in their copolymerization reactivity rates. Various patent specifications describe the preparation of multiblock copolymers containing tapered copolymer blocks including U.S. patent specifications 3,251,095; 3,265,765; 3,639,521 and 4,208,356.

Conjugated dienes which may be utilized to prepare the polymers and copolymers are those having from 4 to 8 carbon atoms per molecule and include 1,3-butadiene, 2-methyl-1,3-butadiene(isoprene),2,3-dimethyl-1,3-butadiene, 1,3-pentadiene and 1,3-hexadiene. Mixtures of such conjugated dienes may also be used. The preferred conjugated diene is 1,3-butadiene. The polymerized butadiene blocks preferably have an average molecular weight in the range of from 35,000 to 150,000, 35%-50% of the condensed butadiene units having 1,2-configuration.

Vinyl aromatic hydrocarbons which may be utilized to prepare copolymers include styrene, o-methylstyrene, p-methylstyrene, p-tert-butylstyrene, 1,3-dimethylstyrene, alpha-methylstyrene, vinylnaphthalene and vinylanthracene. The preferred vinyl aromatic hydrocarbon is styrene. The polymerized styrene blocks preferably have an average molecular weight in the range of from 4,000 to 60,000.

It should be observed that the above-described polymers and copolymers may, if desired, be readily prepared by the methods set forth hereinbefore. However, since many of these polymers and copolymers are commercially available, it is usually preferred to employ the commercially available polymer as this serves to reduce the number of processing steps involved in the overall process. The hydrogenation of these polymers and copolymers may be carried out by a variety of well established processes including hydrogenation in the presence of such catalysts as Raney Nickel, noble metals such as platinum and palladium and soluble transition metal catalysts. Suitable hydrogenation processes which can be used are ones wherein the diene-containing polymer or copolymer is dissolved in an inert hydrocarbon diluent such as cyclohexane and hydrogenated by reaction with hydrogen in the presence of a soluble hydrogenation catalyst. Such processes are disclosed in U.S. patent specifications 3,113,986 and 4,226,952. The polymers and copolymers are hydrogenated in such a manner as to produce hydrogenated polymers and copolymers having a residual unsaturation content in the polydiene block of from 0.5 to 20 per cent of their original unsaturation content prior to hydrogenation.

These block copolymers can be functionalized as described in U.S. patent specification 4,578,429, which relates to a functionalized selectively hydrogenated block copolymer selected from the group consisting of AB diblock copolymers and multiblock copolymers, to which has been grafted an acid compound or its derivative, wherein substantially all of the acid compounds or their derivatives are grafted to the block copolymer at the secondary or tertiary carbon positions in the B blocks, or by other methods which are well known in the prior art, e.g. in U.S. patent specifications 4,292,414 and 4,427,828. The functionalized block copolymer is a thermally stable modified selectively hydrogenated high 1,2 content block copolymer wherein at least one acid compound is grafted to the block copolymer (base polymer).

The average unsaturation of the hydrogenated block copolymer is reduced to less than 20% of its original value.

According to a preferred embodiment of the present invention more than 25% of the monoalkenyl aromatic hydrocarbon units are hydrogenated.

The preferred modifying monomers for use in functionalization are those which are reactive with polyamides and may include sulphonic acids and unsaturated mono- and polycarboxylic-containing acids ($C_3$-$C_{10}$) with preferably at least one olefinic unsaturation, and anhydrides, salts, esters, amides, thiols, thioacids, glycidyl, hydroxy, glycol, and other substituted derivatives from said acid.

Examples of such acids, anhydrides and derivatives thereof include maleic acid, fumaric acid, itaconic acid, citraconic acid, acrylic acid, glycidyl acrylate, cyanoacrylates, hydroxy $C_1$-$C_{20}$ alkyl methacrylates, acrylic polyethers, acrylic anhydride, methacrylic acid, crotonic acid, isocrotonic acid, mesaconic acid, angelic acid, maleic anhydride, itaconic anhydride, citraconic anhydride, sodium acrylate, calcium acrylate, and magnesium acrylate.

Other monomers which can be used either by themselves or in combination with one or more of the carboxylic acids or derivatives thereof include $C_2$-$C_{50}$ vinyl monomers such as acrylamide, and monovinyl aromatic compounds, i.e. styrene, chlorostyrenes, bromostyrenes, alpha-methylstyrene and vinylpyridines.

Other monomers which can be used are $C_4$ to $C_{50}$ vinyl esters, vinyl ethers and allyl esters, such as vinyl butyrate, vinyl laurate, vinyl stearate and vinyl adipate and monomers having two or more vinyl groups per molecule, such as divinyl benzene, ethylene dimethacrylate, triallyl phosphite, dialkylcyanurate and triallyl cyanurate.

The preferred monomers to be grafted to the block copolymers according to the present invention are maleic anhydride, maleic acid, fumaric acid and their derivatives. It is well known in the art that these monomers do not polymerize easily.

Of course, mixtures of monomer can be also added so as to achieve graft copolymers in which the graft chains contain at least two different monomers (in addition to the base polymer monomers). The functionalized block copolymers can be added to the blend as described or cut back with up to 75% by weight of an unfunctionalized block copolymer.

The grafted acid compound or its derivative is preferably present in the functionalized block copolymer in a content in the range of from 0.02 to 20, more preferably 0.1 to 10 and most preferably 0.2 to 5 per cent by weight.

The composition of the present invention can be obtained by melt-blending in the range of from 5% to 70% by weight, preferably 20% to 60% and more preferably 40% to 50% of a polyphenylene ether resin with in the range of from 20 to 95% by weight, preferably 30% to 60% and more preferably 35% to 45% of a polyamide and 0.5% to 90% by weight, preferably 2% to 40% and more preferably 10% to 20% of the functionalized hydrogenated block copolymer. Other polymers described in the prior art may also be

blended with the composition, for example, a styrene homopolymer or random copolymer resin or unfunctionalized block copolymer as described previously. Such other polymers are preferably present in the composition in an amount of up to 70% by weight.

The method used to form the blend is not critical provided the polymers are homogeneously dispersed. Incomplete mixing results in the formation of aggregates which impair the physical properties of the blend.

In the present invention, the temperature and period of melt-blending are important factors for the purpose of obtaining a composition with the desired physical properties. The melt-blending temperature, though it varies depending upon the blending ratios of the polyphenylene oxide, the polyamide and the block copolymer, is selected generally from the range of 180 °C to 350 °C, preferably 200 °C to 330 °C and more preferably between 225 °C and 310 °C. Melt-blending temperatures below 180 °C tend to lower the strength of the composition. Temperatures exceeding 350 °C are also undesirable because the polyphenylene ether tends to become a gel type polymer. The melt-blending period, though it varies depending upon the melt-blending temperature, is selected generally from the range of 0.3 to 20 minutes, preferably 0.5 to 15 minutes, more preferably 1 to 10 minutes.

Melt-blending has been found to be particularly effective at about 100 °C, above the glass transition range of the polyphenylene oxide. An antioxidant can be employed in combination with oxygen free atmosphere to reduce oxidation. Suitable antioxidants which can be used are, for example, phenyl-beta-naphthylamine and a 1:1 mixture of acetylphenylhydrazine and tricetylborate.

The melt-blending equipment may be of any type which is capable of treating a molten viscous mass and any system, a batch or continuous system, can be applied. As examples of the equipment, there may be given extruders, Banbury mixers, milling rolls, and kneaders.

In order to achieve a satisfactory degree of liquid phase blending in accordance with the melt-blending technique, that is to achieve blending on a molecular scale, a high degree of shearing, such as provided by a vented extruder, can be employed. At the termination of the blending of the various polymeric components, the liquid phase blend can be recovered by standard procedures. This blend can thereafter be moulded to an appropriate shape by the application of heat and pressure in accordance with standard moulding techniques.

It has been found beneficial to form a preblend of the polyphenylene ether resin with a portion of the elastomeric modifier and a preblend of the polyamide with the rest of the elastomeric modifier, for example on a high speed intensive mixer. These preblends are then mixed together on a similar high speed intensive mixer and fed to a moulding machine.

The thermoplastic compositions of the present invention, as described above, also can have various fillers incorporated into them such as calcium carbonate, silica gel and carbon black., in amounts based on total composition weight of from 1% to 100% by weight and extender oils such as mineral oil in amounts from 1% to 30% by weight. Additional ingredients such as antioxidants, for example, phenyl-beta-naphthylamine and a 1:1 mixture of acetylphenylhydrazine and tricetyl borate can also be employed. These materials are utilized in combination with the aforementioned thermoplastic compositions of the present invention to modify their properties in accordance with standard techniques of the art.

The invention is further illustrated by the following Examples. All proportions are on a weight basis.

Examples 1 and 2 and Comparative Experiments A-D

Six compositions were prepared by admixing poly(2,6-dimethyl-1,4 phenylene oxide) resin (PPO from Aldrich Chemical Co.), nylon 6,6 (available under the trade mark Zytel 101 from DuPont) and various amounts of several hydrogenated styrene-butadiene-styrene block copolymers, or a maleic anhydride functionalized hydrogenated styrene-butadiene-styrene block copolymer as indicated in Table I.

TABLE I

| Compparative Experiment | Example | PPO | Nylon | Block Copolymer 1 | Block Copolymer 2 | Functionalized Block Copolymer |
|---|---|---|---|---|---|---|
| A | | 50 | 50 | - | - | - |
| B | | 40 | 40 | - | 20 | - |
| C | | 40 | 40 | 10 | 10 | - |
| D | | 40 | 40 | 20 | - | - |
| | 1 | 40 | 40 | - | - | 20 |
| | 2 | 40 | 40 | - | 10 | 10 |

The saturated block copolymers used were as follows:

Block Copolymer 1 -

linear polystyrene-hydrogenated polybutadiene-polystyrene triblock copolymer - MW 52,500; 29% polystyrene; available from Shell Chemical Company.

Block Copolymer 2 -

linear polystyrene-hydrogenated polybutadiene-polystyrene triblock copolymer - MW 174,000; 33% polystyrene; available from Shell Chemical Company.

Functionalized Block Copolymer -

maleic anhydride functionalized linear polystyrene-hydrogenated butadiene-polystyrene triblock copolymer - MW before functionalization 52,000; 29% polystyrene; 2% maleic anhydride.

The ingredients were compounded on a 30 mm twin screw extruder. The conditions for extrusion are given hereinafter in Table II.

TABLE II

| Extrusion Conditions | | | | |
|---|---|---|---|---|
| | Temperature (°C) | | | Screw Speed RPM[1)] |
| | Feed Zone | Mid Zone | Die | |
| Nylon Preblends | 210 | 260 | 245 | 400 |
| PPO Preblends | 270 | 290 | 290 | 400 |
| Comparative Experiments A-D and Examples 1-2 | 250 | 280 | 280 | 400 |

[1)] RPM - revolutions per minute

The extrudate was cut into pieces and injection moulded into test bars on a 42g (1.5 oz) injection moulding machine. The moulding machine was run at an injection pressure of 70 kgf/cm$^2$, a mould temperature of 45 °C, a total cycle time of 40 sec, and a temperature profile of 270, 275, 280, 290 °C from feed zone to nozzle, respectively.

Table III shows the evaluation of the compositions for physical properties and solvent resistance.

TABLE III

| Physical Properties | | | | | | |
|---|---|---|---|---|---|---|
| Compparative Experiment | Example | Room Temp. Izod | -29 °C Izod | -40 °C Izod | Flex Mod (Pa) | Continuous Phase |
| A | | 0.87 | 0.62 | 0.60 | 0.273 | Nylon |
| B | | 0.81 | 0.64 | 0.61 | 0.191 | PPO |
| C | | 0.91 | 0.62 | 0.60 | 0.139 | PPO |
| D | | 2.6 | 1.5 | 1.21 | 0.104 | PPO |
| | 1 | 2.8 | 2.2 | 1.76 | 0.128 | Nylon |
| | 2 | 2.2 | 1.0 | 0.88 | 0.164 | Nylon |

Physical properties measured include:
Room Temperature Izod
- Notched Izod impact resistance at room temperature (J per 2.54 cm of notch); ASTM D256
-29 °C Notched Izod
- impact resistance at -29 °C
-40 °C Notched Izod
- impact resistance at -40 °C
Flex Mod
- Flexural Modulus (Pa); ASTM D790
Continuous Phase
- Determination of Blend Morphology by Microscopy

In Comparative Experiment A no elastomeric modifier was added to the blend and even though this material was stiff and solvent resistant it lacked adequate toughness. In Comparative Experiment B the addition of a high molecular weight hydrogenated styrene-butadiene-styrene block copolymer did not improve the blend's toughness and this blend also lacked solvent resistance. In Comparative Experiment B due to the miscibility of the styrene portion of the block copolymer in polyphenylene oxide, all of the block copolymer was dispersed in the polyphenylene oxide phase, causing it to become continuous. The addition of low molecular weight hydrogenated styrene-butadiene-styrene block copolymer in Comparative Experiment C caused a further decrease in the stiffness of the blend. Comparative Experiment D showed that the addition of low molecular weight hydrogenated styrene-butadiene-styrene block copolymers to the polyphenylene oxide/nylon blend can improve the toughness of the blend, however, only at a great loss in stiffness. By substitution of the hydrogenated styrene-butadiene-styrene block copolymers with a maleic anhydride functionalized hydrogenated styrene-butadiene-styrene block copolymer as in Example 1, an improvement in the toughness of the blend occurs at a higher stiffness. A continuous nylon phase for solvent resistance is also maintained. Example 2 shows that by cutting back the maleic anhydride functionalized hydrogenated block copolymer with a high molecular weight hydrogenated block copolymer, the stiffness of the polyphenylene oxide/nylon blend can be further improved with a slight loss in toughness, but at no loss in solvent resistance.

## Claims

**1.** A thermoplastic composition comprising in the range of from 5 to 70 per cent by weight of a polyphenylene ether resin, in the range of from 20 to 95 per cent by weight of a polyamide resin and in the range of from 0.5 to 90 per cent by weight of a functionalized monoalkenyl arene-conjugated diene block copolymer, wherein the functionalized block copolymer is a functionalized selectively hydrogenated block copolymer of the general formula $B_n(AB)_oA_p$ where n = 0 or 1, o = 0-50, p = 0 or 1 - with the proviso that n and p are not zero when o is zero - to which has been grafted an acid compound or its derivative wherein

(1) each A is predominantly a polymerized monoalkenyl aromatic hydrocarbon block having an average molecular weight in the range of from 2,000 to 115,000;

(2) each B prior to hydrogenation is predominantly a polymerized conjugated diene hydrocarbon block having an average molecular weight in the range of from 20,000 to 450,000;

(3) the blocks A constituting in the range of from 5 to 95 weight per cent of the copolymer;
(4) the unsaturation of the block B is less than 10% of the original unsaturation;
(5) the unsaturation of the A blocks is above 50% of the original unsaturation; and
(6) substantially all of the acid compounds or their derivatives are grafted to the block copolymer at secondary or tertiary carbon positions in the B blocks.

**2.** A composition as claimed in claim 1 wherein the functionalized selectively hydrogenated block copolymer has at least 1 B mid block and at least two A end blocks and the unsaturation of the A blocks is above 50% of the original unsaturation.

**3.** A composition as claimed in any one of the preceding claims wherein the block copolymer is a styrene-butadiene-styrene block copolymer.

**4.** A composition as claimed in any one of the preceding claims wherein the unsaturation of block B is reduced to less than 5% of its original value.

**5.** A composition as claimed in any one of the preceding claims wherein the average unsaturation of the hydrogenated block copolymer is reduced to less than 20% of its original value.

**6.** A composition as claimed in any one of the preceding claims wherein an average of less than 10% of the monoalkenyl aromatic hydrocarbon units are hydrogenated.

**7.** A composition as claimed in claim 1 wherein an average of more than 25% of the monoalkenyl aromatic hydrocarbon units are hydrogenated.

**8.** A composition as claimed in any one of the preceding claims wherein the acid compound is maleic acid.

**9.** A composition as claimed in any one of the preceding claims wherein the grafted acid compound or its derivative is present in the functionalized block copolymer in a content in the range of from 0.2 to 5 per cent by weight.

**10.** A composition as claimed in any one of the preceding claims wherein the polyamide is polyhexamethylene adipamide.

**11.** A composition as claimed in any one of claims 1 to 9 wherein the polyamide resin is polyhexamethylene sebacamide, polycaprolactam, polyhexamethylene isophthalamide, polyhexamethylene tere-co-isophthalamide or a mixture or a copolymer thereof.

**12.** A composition as claimed in any one of the preceding claims wherein the polyphenylene ethers are homo- and copolymers of the general formula:

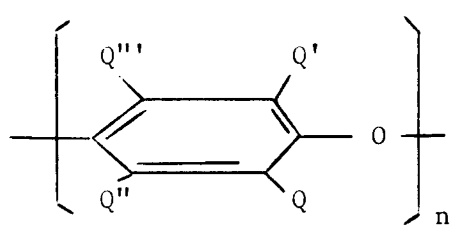

wherein Q, Q', Q'' and Q''' independently represent a hydrogen atom, hydrocarbon radicals, halohydrocarbon radicals having at least two carbon atoms between the halogen atom and the phenol nucleus, hydrocarbonoxy radicals and halohydrocarbonoxy radicals having at least two carbon atoms between the halogen atoms and the phenol nucleus, and Q', Q'' and Q''' in addition may be halogen and n represents the total number of monomer residues and is an integer of at least 50.

13. A composition as claimed in claim 12 wherein the polyphenylene ether is poly(2,6-dimethyl-1,4-phenylene)ether.

14. A composition as claimed in any one of the preceding claims which also comprises between 0 and 70% by weight of a styrene homopolymer or random copolymer resin component.

15. A process for the preparation of the thermoplastic composition as claimed in claim 1 which process comprises melt-blending in the range of from 5% to 70% by weight of a polyphenylene ether resin with in the range of from 20% to 95% by weight of a polyamide and 0.5% to 90% by weight of a functionalized hydrogenated block copolymer.

**Revendications**

1. Composition thermoplastique comprenant une quantité située dans un intervalle allant de 5 à 70% en poids d'une résine de polyphénylène-éther, dans un intervalle allant de 20 à 95% en poids d'une résine polyamide et dans un intervalle allant de 0,5 à 90% en poids d'un copolymère séquencé monoalcényl-arène -diène conjugué fonctionnalisé, où le copolymère séquencé fonctionnalisé est un copolymère séquencé sélectivement hydrogéné fonctionnalisé de formule générale $B_n(AB)_oA_p$ où n = 0 ou 1, o = 0-50, p = 0 ou 1 sous réserve que n et p ne valent pas zéro lorsque o vaut zéro - auquel on a greffé un composé acide ou son dérivé dans lequel
   (1) chaque A est de façon prédominante une séquence hydrocarbonée monoalcényl-aromatique polymérisée ayant un poids moléculaire moyen situé dans un intervalle allant de 2000 à 115 000;
   (2) chaque B avant l'hydrogénation est de façon prédominante une séquence hydrocarbonée de diène conjugué polymérisée ayant un poids moléculaire moyen situé dans un intervalle allant de 20 000 à 450 000;
   (3) les séquences A constituant de 5 à 95% en poids du copolymère;
   (4) l'insaturation de la séquence B est inférieure à 10% de l'insaturation d'origine;
   (5) l'insaturation des séquences A est supérieure à 50% de l'insaturation d'origine; et
   (6) sensiblement tous les composés acides ou leurs dérivés sont greffés au copolymère séquencé en des positions de carbones secondaires ou tertiaires dans les séquences B.

2. Composition selon la revendication 1 dans laquelle le copolymère séquencé sélectivement hydrogéné fonctionnalisé a au moins une séquence médiane B et au moins deux séquences d'extrémité A et l'insaturation des séquences A est supérieure à 50% de l'insaturation d'origine.

3. Composition selon l'une quelconque des revendications précédentes dans laquelle le copolymère séquencé est un copolymère séquencé styrène-butadiène-styrène.

4. Composition selon l'une quelconque des revendications précédentes dans laquelle l'insaturation de la séquence B est réduite à moins de 5% de sa valeur d'origine.

5. Composition selon l'une quelconque des revendications précédentes dans laquelle l'insaturation moyenne du copolymère séquencé hydrogéné est réduite à moins de 20% de sa valeur d'origine.

6. Composition selon l'une quelconque des revendications précédentes dans laquelle une moyenne de moins de 10% des unités hydrocarbonées monoalcénylaromatiques sont hydrogénées.

7. Composition selon la revendication 1 dans laquelle une moyenne de plus de 25% des unités hydrocarbonées monoalcênyl-aromatiques sont hydrogénées.

8. Composition selon l'une quelconque des revendications précédentes dans laquelle le composé acide est l'acide maléique.

9. Composition selon l'une quelconque des revendications précédentes dans laquelle le composé acide greffé ou son dérivé est présent dans le copolymère séquencé fonctionnalisé en une teneur allant de 0,2 à 5% en poids.

**10.** Composition selon l'une quelconque des revendications précédentes dans laquelle le polyamide est le polyhexaméthylène adipamide.

**11.** Composition selon l'une quelconque des revendications 1 à 9 dans laquelle la résine de polyamide est le polyhexaméthylène sébacamide, le polycaprolactame, le polyhexaméthylène isophtalamide, le polyhexaméthylène téréco-isophtalamide ou un de leurs mélanges ou copolymères.

**12.** Composition selon l'une quelconque des revendications précédentes dans laquelle les polyphénylène éthers sont des homo- et copolymères de formule générale:

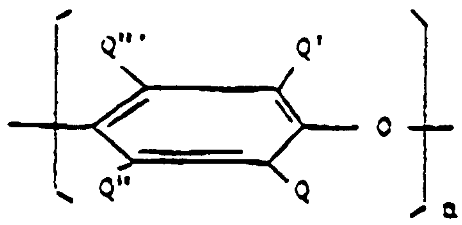

où Q, Q', Q'' et Q''' représentent indépendamment un atome d'hydrogène, des radicaux hydrocarbonés, des radicaux halohydrocarbonés ayant au moins deux atomes de carbone entre l'atome d'halogène et le noyau phénol, des radicaux hydrocarbonoxy et des radicaux halohydrocarbonoxy ayant au moins deux atomes de carbone entre les atomes d'halogène et le noyau phénol, et Q', Q'' et Q''' en outre peuvent être des halogènes et n représente le nombre total de résidus monomères et est un nombre entier valant au moins 50.

**13.** Composition selon la revendication 12 dans laquelle le polyphénylène éther est le poly(2,6-diméthyl-1,4-phénylène)éther.

**14.** Composition selon l'une quelconque des revendications précédentes qui comprend en outre entre 0 et 70% en poids d'un homopolymère de styrène ou composant résine copolymère aléatoire.

**15.** Procédé de préparation de la composition thermoplastique selon la revendication 1, dans lequel on mélange par fusion de 5% à 70% en poids d'une résine polyphénylène éther avec de 20% à 95% en poids d'un polyamide et de 0,5% à 90% en poids d'un copolymère séquencé hydrogéné fonctionnalisé.

**Patentansprüche**

**1.** Thermoplastische Masse, umfassend im Bereich von 5 bis 70 Gew.-% eines Polyphenylenetherharzes, im Bereich von 20 bis 95 Gew.-% eines Polyamidharzes und im Bereich von 0,5 bis 90 Gew.-% eines funktionalisierten Blockcopolymers aus Monoalkenylaren und konjugiertem Dien, wobei das funktionalisierte Blockcopolymer ein funktionalisiertes selektiv hydriertes Blockcopolymer ist der allgemeinen Formel $B_n(AB)_oA_p$ , in der n = 0 oder 1, o = 0-50, p = 0 oder 1 ist - mit der Maßgabe, daß n und p nicht null sind, wenn o null ist - auf das eine Säurekomponente oder ein Derivat davon aufgepropft ist, wobei

(1) jedes A überwiegend ein Block aus polymerisiertem monoalkenyl-aromatischem Kohlenwasserstoff mit einem mittleren Molekulargewicht im Bereich von 2 000 bis 115 000 ist;
(2) jedes B vor der Hydrierung überwiegend ein Block aus polymerisiertem konjugiertem Dien-Kohlenwasserstoff ist mit einem mittleren Molekulargewicht im Bereich von 20 000 bis 450 000;
(3) die Blöcke A im Bereich von 5 bis 95 Gew.-% des Copolymers ausmachen;
(4) der Gehalt an ungesättigten Bindungen in dem Block B weniger als 10% des ursprünglichen Gehalts an ungesättigten Bindungen ist;
(5) der Gehalt an ungesättigten Bindungen in den Blöcken A über 50% des ursprünglichen Gehalts an ungesättigten Bindungen ist; und
(6) im wesentlichen alle Säurekomponenten oder ihre Derivate auf das Blockcopolymer an sekundären oder tertiären Kohlenstoffstellen der Blöcke B aufgepfropft sind.

2. Masse nach Anspruch 1, wobei das funktionalisierte, selektiv hydrierte Blockcopolymer zumindest einen B-Mittelblock und zumindest zwei A-Endblöcke besitzt und der Gehalt an ungesättigten Bindungen der Blöcke A über 50% des ursprünglichen Gehalts an ungesättigten Bindungen liegt.

3. Masse nach einem der vorangehenden Ansprüche, wobei das Blockcopolymer ein Styrol/Butadien/Styrol-Blockcopolymer ist.

4. Masse nach einem der vorangehenden Ansprüche, wobei der Gehalt an ungesättigten Bindungen in Block B auf weniger als 5% des ursprünglichen Wertes verringert ist.

5. Masse nach einem der vorangehenden Ansprüche, wobei der mittlere Gehalt an ungesättigten Bindungen des hydrierten Blockcopolymers auf weniger als 20% des ursprünglichen Wertes verringert ist.

6. Masse nach einem der vorangehenden Ansprüche, wobei im Mittel weniger als 10% der Monoalkenyl-aromatischen Kohlenwasserstoffeinheiten hydriert sind.

7. Masse nach Anspruch 1, wobei im Mittel mehr als 25% der Monoalkenyl-aromatischen Kohlenwasserstoffeiheiten hydriert sind.

8. Masse nach einem der vorangehenden Ansprüche, wobei die Säurekomponente Maleinsäure ist.

9. Masse nach einem der vorangehenden Ansprüche, wobei die aufgepfropfte Säurekomponente oder deren Derivat in dem funktionaliserten Blockcopolymer in einer Menge im Bereich von 0,2 bis 5 Gew.-% vorhanden ist.

10. Masse nach einem der vorangehenden Ansprüche, wobei das Polyamid Polyhexamethylen-adipinsäureamid ist.

11. Masse nach einem der Ansprüche 1 bis 9, wobei das Polyamidharz Polyhexamethylen-sebacinsäureamid, Polycaprolactam, Polyhexamethylen-isophthalsäureamid, Polyhexamethylen-tere-coisophthalsäureamid oder ein Gemisch oder ein Copolymer davon ist.

12. Masse nach einem der vorangehenden Ansprüche, wobei die Polyphenylenether Homo- und Copolymere sind der allgemeinen Formel:

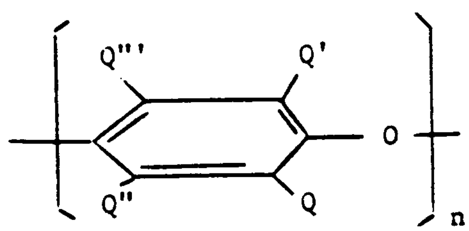

in der Q, Q', Q'' und Q''' unabhängig voneinander jeweils ein Wasserstoffatom, Kohlenwasserstoffreste, Halogenkohlenwasserstoffreste mit zumindest zwei Kohlenstoffatomen zwischen dem Halogenatom und dem Phenolkern, Kohlenwasserstoffoxyreste und Halogenkohlenwasserstoffoxyreste mit zumindest zwei Kohlenstoffatomen zwischen den Halogenatomen und dem Phenolkern sind, und Q', Q'' und Q''' außerdem Halogen sein können und n die Gesamtzahl der Monomerreste darstellt und eine ganze Zahl von zumindest 50 ist.

13. Masse nach Anspruch 12, wobei der Polyphenylenether Poly(2,6-dimethyl-1,4-phenylen)ether ist.

14. Masse nach einem der vorangehenden Ansprüche, die zusätzlich zwischen 0 und 70 Gew.-% eines Styrolhomopolymers oder einer statistischen Copolymerharzkomponente umfaßt.

**15.** Verfahren zur Herstellung der thermoplastischen Masse nach Anspruch 1, wobei das Verfahren umfaßt ein Vermischen in der Schmelze von im Bereich von 5 bis 70 Gew.-% eines Polyphenylenetherharzes mit im Bereich von 20 bis 95 Gew.-% eines Polyamids und 0,5 bis 90 Gew.-% eines funktionalisierten hydrierten Blockcopolymers.